# EUROPÄISCHE PATENTSCHRIFT

(11) **EP 3 001 079 B1**
(45) Veröffentlichungstag und Bekanntmachung des Hinweises auf die Patenterteilung: **23.08.2017**
(21) Anmeldenummer: 15185331.4
(22) Anmeldetag: 15.09.2015
(51) Int. Cl.: F16K 31/122, F16K 37/00, F16K 27/00

(54) **STELLANORDNUNG UMFASSEND EINEN LINEARANTRIEB UND EINEN STELLUNGSREGLER**
POSITIONING ASSEMBLY COMPRISING A LINEAR DRIVE AND A POSITION CONTROL SYSTEM
AGENCEMENT DE REGLAGE COMPRENANT UN ENTRAINEMENT LINEAIRE ET UN POSITIONNEUR

(30) Priorität: 15.09.2014 DE 102014113282
(43) Veröffentlichungstag der Anmeldung: 30.03.2016
(73) Patentinhaber: Samson AG, 60314 Frankfurt (DE)
(72) Erfinder: Crespo Vidal, Fausto, 63505 Langenselbold (DE)
(74) Vertreter: Puschmann Borchert Bardehle Patentanwälte Partnerschaft mbB

(56) Entgegenhaltungen:
- EP-A1- 2 687 763
- DE-A1- 2 708 676
- DE-A1-102006 039 493
- DE-A1-102009 058 225

## Beschreibung

Die Erfindung betrifft eine Stellanordnung umfassend einen Linearantrieb und einen Stellungsregler zur Steuerung einer Stellarmatur gemäß dem Oberbegriff des Anspruchs 1.

Bei geschlossenen Gehäuseausführungen, wie z.B. in der Lebensmittel- und Pharmabranche oder bei Ventilen für den Einsatz in explosionsgefährdeter Umgebung üblich, gelangt man im montierten Zustand von Stellungsregler und Linearantrieb gar nicht an die Verbindungsstelle, um die Schrauben zur Befestigung der Kupplung an der Betätigungsstange lösen zu können. In diesem Fall muss z.B. die Betätigungsstange im Stellungsgeber gegenüber deren Gehäuse soweit beweglich sein, bis man in der Lage ist, mit einem Schraubenschlüssel die mechanische Kupplung lösen zu können.

Die DE 10 2009 058 225 A1 offenbart einen pneumatischen Linearantrieb zum translatorischen Stellen eines Stellgliedes, wobei eine Kopplung der Ventilstange über einen Stangenverbinder erreicht wird. Ein weiterer Antriebsstangenabschnitt ist über Muttern mit einem angetriebenen Kolben verbunden.

Die DE 10 2006 039 493 A1 betrifft ein doppelt dichtendes Ventil, das ein Axialstellglied umfassend eine mit einem Antrieb verbundene Stellstange aufweist. Das Ventil weist an dem Stellglied abgewandten Ende eine Positionsstange auf, die Magnetelemente umfasst, um eine Detektion der Magnetposition mittels Hall-Sensoren zu ermöglichen. Die Positionsstange ist über ein Federelement an die Stellstange gekoppelt, wodurch in jedem Betriebszustand die Positionsstange an die Stellstange angedrückt wird. Durch diese Anordnung kann eine Kalibrierung der Position ermöglicht werden, indem die Position der Magnetelemente über Distanzstücke einstellbar ist. Um diese Positionsstange herum kann der Stellungsregler mit seiner Positionserfassung auf den Linearantrieb aufgesetzt werden.

Diese Ausgestaltung hat den Nachteil, dass aufgrund hoher Stelldynamik die Feder eine hohe Federkonstante aufweisen soll, um eine ständige Verbindung zu gewährleisten. Jedoch muss im Betriebsfall der Antrieb auch gegen diesen Federdruck arbeiten. Dadurch wird der Wirkungsgrad des Ventils reduziert.

Es ist Aufgabe der Erfindung eine auf einfache Weise kalibrierbare Stellanordnung zur Steuerung einer Stellarmatur anzugeben, die eine hohe Dynamik bei hoher Effizienz zulässt.

Die Aufgabe wird durch die kennzeichnenden Merkmale des Anspruchs 1 in Verbindung mit seinen Oberbegriffsmerkmalen gelöst.

Die Unteransprüche stellen vorteilhafte Weiterbildungen der Erfindung dar.

In bekannter Weise umfasst eine Stellanordnung für eine Stellarmatur einen Linearantrieb, der ein Linearstellelement zur Steuerung der Stellarmatur umfasst. Der Linearantrieb ist lösbar mit einem Stellungsregler verbunden, der wiederum mit einem Indikatorelement zusammenwirkt, das an das Linearstellelement über eine Koppeleinheit derart gekoppelt ist, dass das Indikatorelement der axialen Bewegung des Linearstellelements folgt. So kann über die Position des Indikatorelements auf die Position des Stellelements geschlossen werden. Die Positionserfassung kann in Form von einer Endlagererfassung oder einer kontinuierlichen Erfassung erfolgen.

Erfindungsgemäß ist vorgesehen, dass die Koppeleinheit einen Permanentmagneten umfasst, durch dessen Magnetkraft die Kopplungseinheit das Indikatorelement mit dem Linearstellelement an einer Verbindungsstelle lösbar verbindet. Die Verbindungstelle kann beispielsweise flächig, linienförmig oder punktförmig sein.

Durch die magnetische Kopplung des Indikatorelements an das Linearstellelement kann auf besonders effiziente Weise eine lösbare Verbindung zwischen Stellungsregler und Linearantrieb bereitgestellt werden, die eine gute Zugänglichkeit der Verbindungsstelle bereitstellt.

In einer besonders einfachen Ausgestaltung kann der Permanentmagnet unmittelbar mit dem Linearstellelement oder dem Indikatorelement geklebt oder eingepresst verbunden sein. Das Linearstellelement und/oder das Indikatorelement können ferromagnetisch oder nichtmagnetisch ausgebildet sein.

Wesentlich ist, dass sich an der Verbindungsstelle eine magnetisch anziehende Paarung ergibt. So ist zur Umsetzung eine Vielzahl von Kombinationen denkbar. So kann sowohl das Indikatorelement als auch das Linearstellelement ferromagnetisch sein, wobei die Kopplungseinheit dann nur aus einem Permanentmagneten bestehen kann, der das Indikatorelement mit dem Linearstellelement verbindet. Alternativ kann beispielsweise das Indikatorelement nicht magnetisch sein und stoffschlüssig, beispielsweise durch Verkleben oder eingepresst, mit dem Permanentmagneten verbunden sein. Vorzugsweise kann das Linearstellelement dann ferromagnetisch ausgebildet sein, womit dann die magnetische Verbindung hergestellt werden kann. Auch die umgekehrte Variante ist denkbar.

In einer weiteren bevorzugten Ausgestaltung kann die Kopplungseinheit neben dem Permanentmagneten ein ferromagnetisches Element umfassen. So kann beispielsweise das Linearstellelement ferromagnetisch ausgebildet sein, wobei das Indikatorelement nicht magnetisch aber mit dem ferromagnetischen Element verbunden ist, das mit dem Permanentmagneten zusammenwirken kann. Mit dieser Art der Anordnung können auch zwei nichtmagnetische Komponenten erfindungsgemäß verbunden werden, wobei sich beidseitig des Permanentmagneten eine lösbare Verbindungsstelle ergeben kann.

Gemäß einer weiteren Ausführungsform kann die Kopplungseinheit zwei Magnete umfassen. Auf diese Weise können ein nicht magnetisches Linearstellelement und ein nicht magnetisches Indikatorelement jeweils mit einem Magneten z.B. durch Kleben verbunden werden.

Grundsätzlich können im Rahmen der Erfindung auch mehrere Zwischenelemente Teil der Kopplungseinheit sein, um eine entsprechende magnetische Verbindung herzustellen, bei der sich wenigstens eine lösbare Verbindungsstelle ergibt.

Vorzugsweise kann die Kopplungseinheit einen scheibenförmigen Permanentmagneten und ein ferromagnetisches Element aufweisen, das an seinem dem Permanentmagneten zugewandten Ende eine konvexe Oberflächengestaltung aufweist. Dadurch kann eine im Wesentlichen punktförmige Verbindungsstelle bereitgestellt werden. Durch die punktförmige Verbindung ergibt sich ein besserer Ausgleich bei einem Winkelversatz der beiden Stangen zueinander, da der Magnet über einen definierten Punkt kippt. Die Magnetkraft bleibt beim Verkippen an der höchsten Stelle des konvexen Verlaufs auch etwas höher als im Randbereich. So wird ein Wegkippen des Magnets über den gesamten Durchmesser vermieden. Auch magnetseitig kann über ein weichmagnetisches Element eine konvexe Kontaktfläche bereitgestellt werden.

Eine weitere bevorzugte Ausgestaltung sieht vor, dass die Kopplungseinheit ein Abstandselement umfassen kann. Das Abstandselement ist so ausgebildet, dass der Abstand zwischen Indikatorelement und Linearstellelement veränderlich einstellbar ist.

Auf diese Weise kann, da unter Trennung des Stellungsreglers vom Stellantrieb die Kopplungseinheit zugänglich ist, eine Kalibrierung in einer Nulllage durch das Abstandselement vorgenommen werden.

Insbesondere kann das Abstandselement als Schraube ausgebildet sein, die mit einem Gewinde zusammenwirkt. Die Schraube kann dabei aus einem ferromagnetischen Werkstoff bestehen, wobei das Gewinde in ein Gewindestück der Kopplungseinheit eingearbeitet sein kann oder direkt stirnseitig in das Linearstellelement oder das Indikatorelement eingebracht sein kann. Auf diese Weise kann einfach und schnell die Einstellung einer Nulllage, also eine Kalibrierung vorgenommen werden. Dies spielt insbesondere bei einer mechanischen Positionserfassung durch den Stellungsregler eine große Rolle.

Alternativ kann beispielsweise auch der Permanentmagnet mit einem nichtmagnetischen Abstandselement verbunden sein. Auch in einer solchen Ausgestaltung kann eine einfache Kalibrierung vorgenommen werden.

Bevorzugt kann eine ferromagnetische Schraube vorgesehen sein, die einen balligen Kopf aufweist, die mit einem scheibenförmigen Permanentmagneten in punktförmigen Kontakt gebracht werden kann.

Das Indikatorelement kann in Form einer Stange, insbesondere Geberstange, ausgebildet sein, wobei die Positionserfassung über Kontaktschalter erfolgen kann, oder die Geberstange kann Magnet-Elemente umfassen, wobei die Positionserfassung im Stellungsregler über die Erfassung der Lage der Magnet-Elemente erfolgt. Die Positionserfassung kann auch induktiv, kapazitiv oder resistiv (Leitplastik, Poti) erfolgen.

Vorzugsweise kann das Linearstellelement als Antriebsstange ausgebildet sein, die mit einer Stellarmatur verbunden wird, wodurch das Stellelement zwischen Offen- und Schließstellung bewegt wird. Diese Ausgestaltung ist besonders bei der Verwendung von Membranantrieben verbreitet.

Gemäß einer bevorzugten Ausgestaltung kann das Indikatorelement axial verschiebbar im Stellungsregler gelagert sein. Dadurch kann bei Montage des Stellungsreglers an den Linearantrieb automatisch eine Kopplung zwischen Linearstellelement und Indikatorelement bereitgestellt werden, wobei eine ideale Zugänglichkeit der Kopplungseinheit gewährleistet ist. Dies ist insbesondere bei Vorhandensein eines Abstandselements von großer Bedeutung, da so die Kalibrierung des Stellungsreglers auf schnelle und einfache Weise erfolgen kann. Durch die selbsttätige Verbindung des Indikatorelements mit dem Linearstellelement kann die Kalibrierung, Nachjustierung oder Überprüfung sehr schnell vorgenommen werden, da ein Aufsetzen und Abnehmen des Stellungsreglers von dem Linearantrieb zu Testzwecken ohne weiteres möglich ist, obwohl ein Test erst im zusammengesetzten Zustand möglich ist.

Das Magnetmaterial kann Neodym (NdFeB) oder Samarium Kobalt sein.

Erst im eingebauten Zustand der beiden Gehäuse und der mechanischen Kupplung können die Schaltpunkte getestet werden. Zur Einstellung müssen dann evtl. mehrmals die Gehäuse und die Kupplung demontiert werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine teilschematische Schnittansicht einer erfindungsgemäßen Stellarmaturanordnung;
- Fig. 2: eine Schnittansicht einer erfindungsgemäßen Stellarmatur in zusammengesetztem Zustand, und
- Fig. 3: eine Schnittansicht einer erfindungsgemäßen Stellarmatur in getrenntem Zustand.

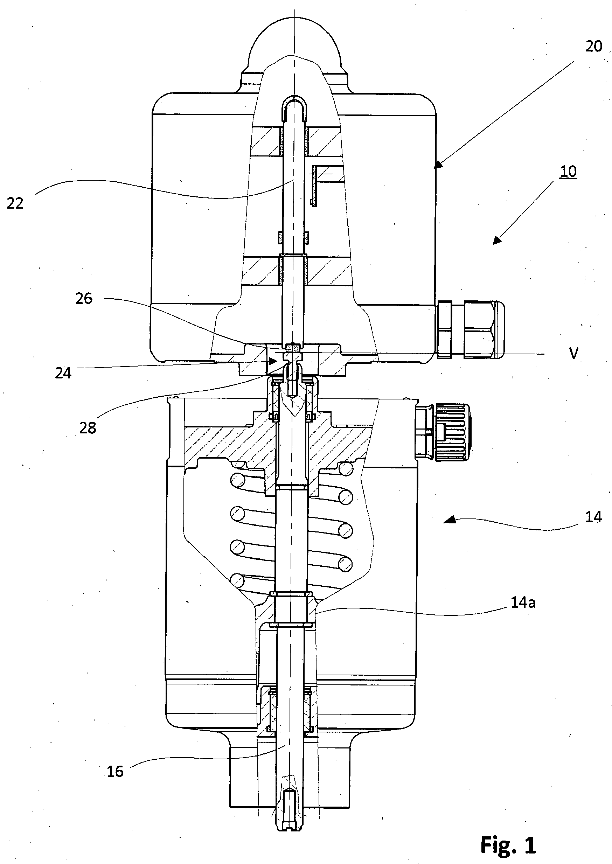

Fig. 1 zeigt eine teilschematische Schnittansicht einer erfindungsgemäßen Stellanordnung 10 umfassend einen Linearantrieb 14 aufweist. Der Linearantrieb 14 ist als federbelasteter Kolbenantrieb 14a ausgestaltet, wobei der Kolbenantrieb 14a mit der Antriebsstange 16 verbunden ist. Die Antriebsstange 16 kann mit einer (nicht gezeigten) Stellarmatur verbunden werden, wodurch das Stellelement der Stellarmatur entsprechend beeinflusst wird.

An den Linearantrieb 14 kann erfindungsgemäß der hier schematisch dargestellte Stellungsregler 20 angeflanscht werden. Der Stellungsregler 20 wirkt zur Posifionsermittlung mit einer Geberstange 22 zur Bestimmung der Position eines Stellglieds einer mit der Stellanordnung verbundenen Stellarmatur. Die Geberstange 22 ist verschiebbar am Stellungsregler 20 gelagert. Zur Verbindung der Geberstange 22 mit der Antriebsstange 16 ist eine Kopplungseinheit 24 vorgesehen, welche die Antriebsstange 16 mit der Geberstange 22 derart lösbar verbindet, dass die Geberstange 22 der Bewegung der Antriebsstange 16 während des Betriebs in axialer Richtung folgt.

Dazu umfasst die Kopplungseinheit 24 einen Permanentmagneten 26 und eine ferromagnetische Schraube 28. Der Permanentmagnet 26 ist gemäß dieser Ausführung stoffschlüssig an die Geberstange 22 angebunden. Die ferromagnetische Schraube 28 hingegen wirkt mit einem stirnseitig in die Antriebsstange 16 eingebrachten Gewinde zusammen.

Die Geberstange 22 und die Antriebsstange 16 sind an einer Verbindungsstelle V, die sich durch den Berührpunkt ergibt, magnetisch verbunden. Durch Überwinden der Magnetkraft kann an der Verbindungsstelle V die Geberstange 22 von der Antriebsstange 16 getrennt werden. Dies ist insbesondere für Wartungs- oder Kalibrierungsarbeiten von großem Nutzen.

Indem die Kopplungseinheit 24 eine ferromagnetische Schraube 28 umfasst, die stirnseitig in die Antriebsstange 16 eingebracht ist, kann durch einfaches Ein- und Ausschrauben der ferromagnetischen Schraube 28 relativ zur Antriebsstange 16 die Verbindungsstelle V relativ zur Antriebsstange 16 verschoben werden. Auf diese Weise kann auf einfache Art eine Kalibrierung der Stellanordnung auf die jeweilige Stellarmatur erfolgen.

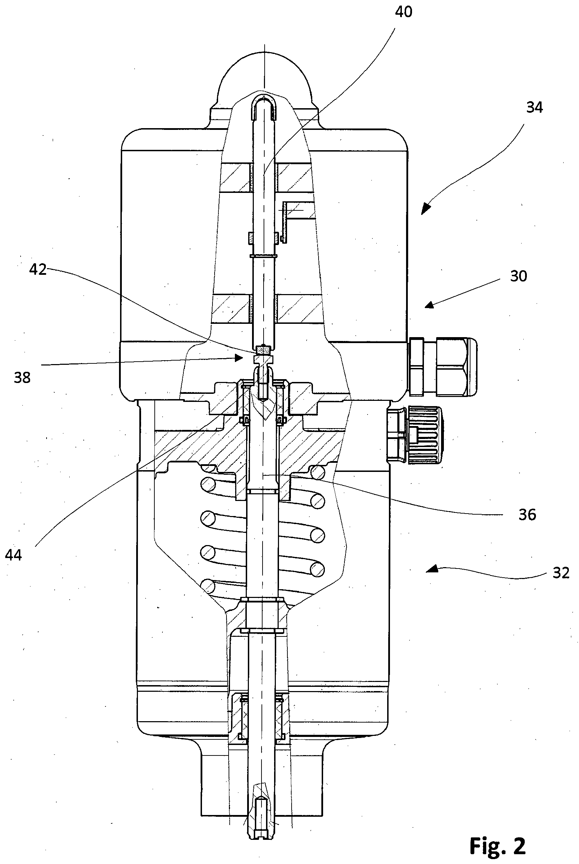

Fig. 2 zeigt eine Schnittansicht einer Stellanordnung 30, die einen Linearantrieb 32 und einen Stellungsregler 34 umfasst. Der Linearantrieb 32 weist eine linear betätigbare Antriebsstange 36 auf, die über eine Kopplungseinheit 38 mit einer Geberstange 40 des Stellungsreglers 34 verbunden ist. Wie in Fig. 1 beschrieben, umfasst die Kupplungseinheit 38 einen Permanentmagneten 42, der mit der Geberstange 40 verbunden ist, sowie eine ferromagnetische Schraube 44, die mit der Antriebsstange 36 verbunden ist. Wie Fig. 2 zu entnehmen ist, führt die Linearbewegung der Antriebsstange 36 zu einer ebensolchen der Geberstange 40. Die Geberstange 40 ist derart ausgebildet, dass ein an der Geberstange 40 angeordneter Magnet und ein Magnetsensor, beispielsweise ein AMR-Sensor, die Endlage detektiert. Der Magnet kann ebenfalls mittels eines Hebelmechanismus von der Geberstange ausgelenkt werden, so dass ein kontinuierliches Signal über den gesamten Hub ausgebbar wäre.

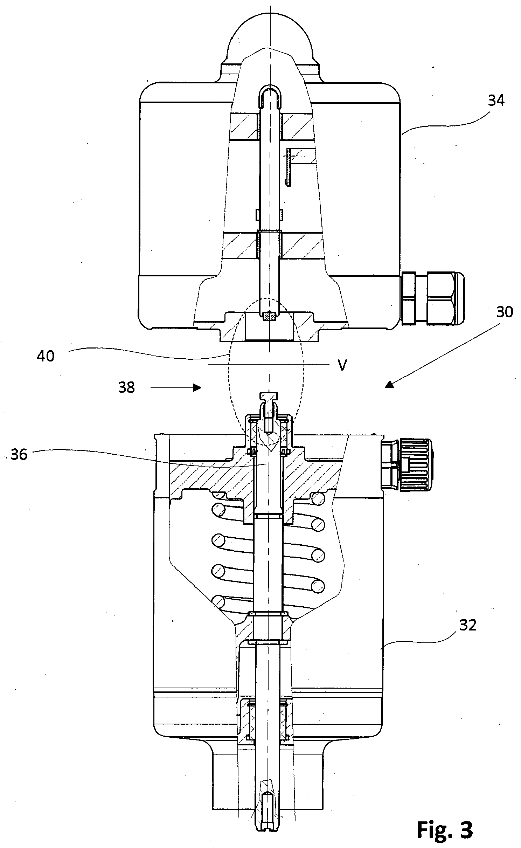

Fig. 3 zeigt die Stellanordnung 30 gemäß Fig. 2 in einem Zustand, in welchem der Stellungsregler 34 von dem Linearantrieb 32 getrennt ist. Dies ist beispielsweise bei Montage oder Justage oder Wartungszwecken der Fall.

Durch die automatische Verbindung der Geberstange 40 mit der Antriebsstange 36 durch die magnetische Kupplung 38 können Trennungs- und Verbindungsvorgänge auf einfache Weise realisiert werden.

So ist eine Stellanordnung geschaffen, die für sensible Anwendungsbereiche, wie sie beispielsweise bei explosionsgefährdeten Anwendungen oder in der Lebensmittel- oder Pharmaindustrie vorliegen, Anwendung findet, da ein geschlossenes System von Stellungsregler 34 und Linearantrieb 32 bereitgestellt wird. Aufgrund der erfindungsgemäßen Kopplungseinheit kann trotz des geschlossenen Systems eine gute Wartungsmöglichkeit und Einstellmöglichkeit gewährleistet und ein effizienter Betrieb ermöglicht werden.

### Bezugszeichenliste

- 10: Stellanordnung
- 12: Stellarmatur
- 14: Linearantrieb
- 14a: Kolben
- 16: Linearstellelement
- 18: Stellelement
- 20: Stellungsregler
- 22: Geberstange / Indikatorelement
- 24: Kupplung
- 26: Permanentmagnet
- 28: ferromagnetische Schraube
- 30: Stellanordnung
- 32: Linearantrieb
- 34: Stellungsregler
- 36: Antriebsstange
- 38: Kopplüngseinheit
- 40: Geberstange
- 42: Permanentmagnet
- 44: ferromagnetische Schraube

## Patentansprüche

1. Stellanordnung (10, 30) für eine Stellarmatur umfassend einen Linearantrieb (14, 32), der ein Linearstellelement (16, 36) zur Steuerung der Stellarmatur umfasst, wobei der Linearantrieb (14,32) lösbar mit einem Stellungsregler (20) verbunden ist, der mit einem Indikatorelement (22,40) zusammenwirkt, das an das Linearstellelement (16, 36) über eine Kopplurigseinheit (24) derart gekoppelt ist, dass das Indikatorelement (22,40) der axialen Bewegung des Linearstellelement (16,36) folgt, so dass über die Position des Indikatorelements (22, 40) auf die Position des Stellelements geschlossen werden kann, **dadurch gekennzeichnet, dass** die Kopplungseinheit (24, 38) einen Permanentmagneten (26,42) umfasst, durch dessen Magnetkraft die Kopplungseinheit (24, 38) das Indikatorelement (22, 40) mit dem Linearstellelement (16, 36) an einer Verbindungsstelle lösbar verbindet.

2. Stellanordnung nach Anspruch 1, **dadurch gekennzeichnet, dass** der Permanentmagnet (26, 42) unmittelbar mit dem Linearstellelement (16,36) oder/und dem Indikatorelement (22, 40) stoffschlüssig oder eingepresst verbunden ist.

3. Stellanordnung nach einem der vorangehenden Ansprüche, **dadurch gekennzeichnet, dass** die Kopplungseinheit (24, 38) mindestens ein ferromagnetisches Element umfasst.

4. Stellanordnung nach einem der vorangehenden Ansprüche, **dadurch gekennzeichnet, dass** die Kopplungseinheit (24,38) wenigstens zwei Permanentmagnete (26, 42) umfasst.

5. Stellanordnung nach einem der vorangehenden Ansprüche, **dadurch gekennzeichnet, dass** die Kopplungseinheit (24, 38) ein Abstandselement umfasst, welches derart ausgebildet ist, dass veränderlich der Abstand zwischen Indikatorelement (22, 40) und Linearstellelement (16, 36) einstellbar ist.

6. Stellanordnung nach einem der vorangehenden Ansprüche, **dadurch gekennzeichnet, dass** das Abstandselement als Schraube ausgebildet ist, die mit einem Gewinde zusammenwirkt.

7. Stellanordnung nach einem der vorangehenden Ansprüche, **dadurch gekennzeichnet, dass** das Indikatorelement (22, 40) als Stange ausgebildet ist, wobei die Stellungserfassung über Kontaktschalter erfolgt.

8. Stellanordnung nach einem der vorangehenden Ansprüche, **dadurch gekennzeichnet, dass** das Indikatorelement (22, 40) als Stange ausgebildet ist, welche Magnet-Elemente umfasst, wobei die Stellungserfassung über die Erfassung der Lage der Magnet-Elemente erfolgt.

9. Stellanordnung nach einem der vorangehenden Ansprüche, **dadurch gekennzeichnet, dass** das Linearstellelement (16, 36) als Antriebsstange (16) ausgebildet ist.

10. Stellanordnung nach einem der vorangehenden Ansprüche, **dadurch gekennzeichnet, dass** das Material des Permanentmagneten Neodym (NdFeB) oder Samarium Kobalt ist.

## Claims

1. Positioning assembly (10, 30) for a control valve, comprising a linear drive(14, 32) which linear drive (14, 32) comprises a linear actuating element (16,36) for controlling said control valve, said linear drive (14, 32) being detachably connected to a positioner (20), which positioner (20) in turn cooperates with an indicator element (22, 40), which indicator element (22, 40) is coupled to said linear actuating element (16, 36) via a coupling unit (24) in such a manner that said indicator element (22,40) follows the axial movement of said linear actuating element (16,36) so that the position of the actuating element can be derived from the position of the indicator element (22, 40), **characterized in that** the coupling unit (24,38) comprises a permanent magnet (26,42) whose magnetic force is used by the coupling unit (24, 38) to detachably connect the indicator element (22, 40) to the linear actuating element (16,36) at a connection point.

2. Positioning assembly according to claim 1, **characterized in that** said permanent magnet (26, 42) is directly connected to said linear actuating element (16, 36) and/or said indicator element (22,40), i.e. it is either integrally connected thereto or by press-fitting.

3. Positioning assembly according to any one of the preceding claims, **characterized in that** said coupling unit (24, 38) comprises at least one ferromagnetic element.

4. Positioning assembly according to any one of the preceding claims, **characterized in that** said coupling unit (24,38) comprises at least two permanent magnets (26, 42).

5. Positioning assembly according to any one of the preceding claims, **characterized in that** said coupling unit (24, 38) comprises a spacer element which is designed such that the spacing between said indicator element (22, 40) and said linear actuating element (16, 36) can be variably adjusted.

6. Positioning assembly according to any one of the preceding claims, **characterized in that** said spacer element is designed as a screw which cooperates with a thread.

7. Positioning assembly according to any one of the preceding claims, **characterized in that** said indicator element (22,40) is provided in the form of a rod, with its position being determined by means of a contact switch.

8. Positioning assembly according to any one of the preceding claims, **characterized in that** said indicator element (22,40) is provided in the form of a rod which comprises magnetic elements, with its position being determined by detecting the positions of said magnetic elements.

9. Positioning assembly according to any one of the preceding claims, **characterized in that** said linear actuating element (16, 36) is provided in the form of a drive rod (16).

10. Positioning assembly according to any one of the preceding claims, **characterized in that** the material of said permanent magnet is neodymium (NdFeB) or samarium cobalt.

## Revendications

1. Dispositif de réglage (10, 30) pour une vanne de réglage comprenant un entraînement linéaire (14,32) pourvu d'un élément de réglage linéaire (16, 36) pour la commande de la vanne de réglage, dans lequel l'entraînement linéaire (14, 32) est raccordé de manière amovible à un régulateur de position (20) coopérant avec un élément indicateur (22, 40) accouplé à l'élément de réglage linéaire (16, 36) au moyen d'une unité d'accouplement (24), de telle manière que l'élément indicateur (22,40) suit le déplacement axial de l'élément de réglage linéaire (16, 36), si bien que la position de l'élément indicateur (22, 40) permet de déduire la position de l'élément de réglage, **caractérisé en ce que** l'unité d'accouplement (24, 38) comprend un aimant permanent (26,42), dont la force magnétique permet à l'unité d'accouplement (24,38) de raccorder de manière amovible l'élément indicateur (22,40) à l'élément de réglage linéaire (16, 36) à un emplacement de connexion.

2. Dispositif de réglage selon la revendication 1, **caractérisé en ce que** l'aimant permanent (26, 42) est raccordé directement à l'élément de réglage linéaire (16, 36) et/ou à l'élément indicateur (22, 40) par liaison de matière ou par sertissage à la presse.

3. Dispositif de réglage selon l'une des revendications précédentes, **caractérisé en ce que** l'unité d'accouplement (24, 38) comprend au moins un élément ferromagnétique.

4. Dispositif de réglage selon l'une des revendications précédentes, **caractérisé en ce que** l'unité d'accouplement (24,38) comprend au moins deux aimants permanents (26, 42).

5. Dispositif de réglage selon l'une des revendications précédentes, **caractérisé en ce que** l'unité d'accouplement (24,38) comprend un élément espaceur, conçu de manière à permettre le réglage d'un espace variable entre l'élément indicateur (22,40) et l'élément de réglage linéaire (16, 36).

6. Dispositif de réglage selon l'une des revendications précédentes, **caractérisé en ce que** l'élément espaceur est réalisé sous forme de vis coopérant avec un filet.

7. Dispositif de réglage selon l'une des revendications précédentes, **caractérisé en ce que** l'élément indicateur (22, 40) est réalisé sous forme de tige, dans lequel la détection de position est effectuée par contacteur.

8. Dispositif de réglage selon l'une des revendications précédentes, **caractérisé en ce que** l'élément indicateur (22,40) est réalisé sous forme de tige comportant des éléments magnétiques, dans lequel la détection de position est effectuée par détection de la position des éléments magnétiques.

9. Dispositif de réglage selon l'une des revendications précédentes, **caractérisé en ce que** l'élément de réglage linéaire (16, 36) est réalisé sous forme de tige d'entraînement (16).

10. Dispositif de réglage selon l'une des revendications précédentes, **caractérisé en ce que** le matériau de l'aimant permanent est le néodyme (NdFeB) ou le samarium-cobalt.
